# DEMANDE DE BREVET EUROPEEN

(11) **EP 1 006 371 A1**
(43) Date de publication de la demande: **07.06.2000**
(21) Numéro de dépôt: 99403021.1
(22) Date de dépôt: 03.12.1999
(51) Int. Cl.: G01V 15/00

(54) **Dispositif de détection électromagnétique, procédé et structure à enterrer**

(30) Priorité: 04.12.1998 FR 9815347; 06.04.1999 FR 9904248; 10.06.1999 FR 9907348
(71) Demandeur: Nortene, 78140 Velizy-Villacoublay (FR)
(72) Inventeur: Vitou, Dominique, 92140 Clamart (FR); Poignon, Jean-Marie, 92370 Chaville (FR)
(74) Mandataire: Leszczynski, André

(57) **Abrégé**

Dispositif de détection électromagnétique pour détecter une structure enterrée telle qu'un grillage avertisseur, une gaine tubulaire ou une conduite, comportant des éléments détectables constitués au moins en partie par des conducteurs électriques.
Ce dispositif comporte :
- un émetteur (5) agencé pour émettre un rayonnement électromagnétique dans le sol dans une bande de fréquences supérieures à 10 MHz, de préférence supérieures à 70 MHz, cet émetteur comprenant une antenne d'émission (8), lesdits conducteurs électriques étant accordés sur une fréquence d'émission de l'émetteur,
- un récepteur (6) comprenant une antenne de réception (9) séparée de l'antenne d'émission et agencé pour recevoir un rayonnement électromagnétique réfléchi par ladite structure (1).

## Description

La présente invention concerne un dispositif de détection électromagnétique ainsi qu'un procédé de mise en oeuvre.

Il est connu de mettre en place lors de l'enfouissement dans le sol de canalisations diverses, des grillages avertisseurs constitués d'une nappe en matière plastique colorée, ces grillages avertisseurs étant enterrés à une certaine distance au-dessus desdites canalisations afin de signaler leur présence lors d'opérations de pelletage ultérieures.

Il est avantageux de pouvoir détecter la présence de tels grillages avertisseurs avant de commencer les opérations de pelletage, afin de réduire les risques d'erreur ou d'accident.

Pour ce faire, de nombreuses solutions ont déjà été proposées, reposant sur l'emploi d'un ou plusieurs éléments détectables au moyen d'un dispositif de détection électromagnétique, ces éléments étant assujettis à la nappe en matière plastique du grillage avertisseur.

Il est ainsi connu de fixer sur la nappe en matière plastique un fil conducteur continu.

Un signal est injecté dans ce fil lors de la détection, soit par connexion directe à un générateur, soit par couplage inductif.

L'emploi d'un tel fil conducteur n'est pas entièrement satisfaisant, car ce fil rend plus difficile le remplacement d'un tronçon de grillage avertisseur après un piquage par exemple puisqu'il faut rétablir la continuité électrique.

En outre, ce fil peut véhiculer des courants parasites.

On a également proposé, dans la demande de brevet français FR-A-2 531 234, d'assujettir à la nappe en matière plastique des circuits résonnants utilisant des condensateurs, donc relativement coûteux.

L'invention a pour objet un dispositif de détection électromagnétique pour détecter une structure enterrée comportant des éléments détectables constitués au moins en partie par des conducteurs électriques, ce dispositif de détection étant caractérisé par le fait qu'il comporte :
- un émetteur agencé pour émettre un rayonnement électromagnétique dans le sol dans une bande de fréquences supérieures à 10 MHz, de préférence supérieures à 70 MHz, cet émetteur comprenant une antenne d'émission,
- un récepteur comprenant une antenne de réception séparée de l'antenne d'émission et agencé pour recevoir un rayonnement électromagnétique réfléchi par ladite structure enterrée.

Avantageusement, les antennes d'émission et de réception sont disposées dans un boîtier laissant passer les ondes électromagnétiques vers le sol et en provenance de ce dernier, et constituant un blindage permettant d'isoler les antennes de l'environnement extérieur, ces dernières étant en outre de préférence séparées à l'intérieur du boîtier par une plaque métallique verticale limitant le couplage entre elles.

Les antennes sont constituées par exemple par deux brins parallèles dont la longueur correspond sensiblement à un quart de la longueur d'onde du rayonnement émis, les brins étant distants d'une demi-longueur d'onde, la plaque métallique limitant le couplage étant située à mi-distance des brins, ces derniers étant disposés en face inférieure d'une cage métallique ouverte vers le bas et dont la hauteur est d'environ un quart de la longueur d'onde du rayonnement émis.

Dans une réalisation, le dispositif de détection comporte en outre un démodulateur synchrone pour traiter un signal dépendant du rayonnement électromagnétique réfléchi par la structure enterrée en fonction d'un signal de référence dépendant du rayonnement électromagnétique émis par l'émetteur.

Avantageusement, le dispositif de détection comporte des moyens de liaison pour transmettre le signal de référence depuis l'émetteur vers le récepteur.

Ces moyens de liaison peuvent être constitués par un câble.

Dans une réalisation, l'émetteur est agencé pour émettre dans la bande 10-2000 MHz, de préférence 70-500 MHz avec balayage de fréquence.

Dans une autre réalisation, l'émetteur est agencé pour émettre dans la bande 10-2000 MHz, de préférence 70-500 MHz avec une ou plusieurs fréquences fixes, la structure enterrée comportant des éléments détectables respectivement sensiblement accordés sur cette ou ces fréquences pour des valeurs de permittivité du sol différentes.

L'invention a encore pour objet un procédé de détection d'une structure enterrée dans le sol, cette structure comportant une nappe en matière plastique et des éléments détectables assujettis à cette nappe, la détection s'effectuant au moyen d'un dispositif de détection électromagnétique, ce procédé étant caractérisé par le fait qu'il comporte les étapes consistant à :
- envoyer dans le sol vers la structure enterrée au moyen d'un émetteur un rayonnement électromagnétique haute fréquence,
- recueillir au moyen d'un récepteur dont l'antenne de réception est éloignée de l'antenne d'émission le rayonnement électromagnétique réfléchi par la structure enterrée,
- traiter un signal représentatif du rayonnement électromagnétique réfléchi par la structure enterrée en fonction d'un signal de référence représentatif du rayonnement électromagnétique émis par l'émetteur, de manière à déterminer la présence effective ou non de ladite structure, le rayonnement électromagnétique émis par l'émetteur étant :
   - de fréquence variable et au moins une partie des éléments détectables étant choisis pour être accordés sur une fréquence d'émission balayée par l'émetteur,
      et/ou
   - de fréquence fixe et les éléments détectables étant choisis pour être accordés sur la fréquence d'émission de l'émetteur pour différentes valeurs de permittivité du sol, représentatives de la plupart des natures du sol dans lequel la structure est susceptible d'être enterrée.

Le rayonnement électromagnétique émis dans le sol peut être polarisé circulairement ou linéairement.

De préférence, le rayonnement électromagnétique émis dans le sol se situe dans la bande de fréquences 10-2000 MHz, de préférence 70-500 MHz.

L'invention a encore pour objet une structure à enterrer telle qu'un grillage avertisseur, une gaine tubulaire ou une conduite, comportant des éléments détectables pour la mise en oeuvre du procédé de détection ci-dessus.

L'invention a ainsi pour objet un grillage avertisseur du type comportant une nappe en matière plastique et des éléments assujettis à cette nappe, détectables à distance au moyen d'un dispositif de détection comprenant un émetteur d'ondes électromagnétiques, ce grillage avertisseur étant caractérisé par le fait que lesdits éléments détectables sont constitués au moins en partie par des conducteurs électriques accordés sur une fréquence d'émission de l'émetteur.

L'invention a encore pour objet une gaine tubulaire ou une conduite comportant des éléments détectables à distance au moyen d'un dispositif de détection comprenant un émetteur d'ondes électromagnétiques, cette gaine ou conduite étant caractérisée par le fait que lesdits éléments détectables sont constitués au moins en partie par des conducteurs électriques accordés sur une fréquence d'émission de l'émetteur.

Lesdits éléments détectables peuvent être composés de tronçons d'un fil conducteur, de préférence non magnétique, peu coûteux en lui-même.

Les éléments détectables peuvent encore être composés de nappes conductrices, métalliques ou réalisées avec une peinture conductrice par exemple.

La discontinuité des éléments détectables permet d'éviter d'avoir à rétablir une continuité électrique lors du remplacement d'un tronçon de structure enterrée et la structure ne véhicule pas de courants parasites.

Dans une réalisation, les éléments détectables ont une longueur correspondant sensiblement à la demi-longueur d'onde dans le sol desdites ondes électromagnétiques, pour une fréquence d'émission de l'émetteur et une permittivité du sol données.

Dans une réalisation, les éléments détectables sont disposés par groupes le long de la structure, les éléments d'un groupe étant respectivement sensiblement accordés sur une même fréquence d'émission de l'émetteur pour des permittivités du sol données. Chaque groupe d'éléments détectables peut en comporter deux ou plus.

Avantageusement, la structure comporte au moins une paire d'éléments détectables de même longueur au sein d'un même groupe d'éléments détectables.

Ceci permet d'améliorer le retour des ondes électromagnétiques vers le récepteur et de faciliter la localisation.

Dans une réalisation particulière, la structure comporte des tronçons de fil conducteur de longueurs différentes au sein d'un même groupe d'éléments détectables, ces longueurs correspondant sensiblement à la demi-longueur d'onde dans le sol desdites ondes électromagnétiques pour une même fréquence d'émission de l'émetteur et des valeurs différentes de la permittivité du sol, représentatives des différentes natures de sol dans lequel la structure est susceptible d'être enterrée, par exemple sable sec, terre végétale ou glaise humide.

De préférence, la longueur des éléments détectables est comprise entre 5 et 50 cm et de préférence encore entre 10 et 45 cm.

Grâce à l'invention, on dispose d'un grillage avertisseur, d'une gaine tubulaire ou d'une conduite peu coûteux à fabriquer et dont la détection peut s'effectuer aisément au moyen d'un dispositif de détection utilisant des antennes relativement directives et présentant un encombrement suffisamment faible pour pouvoir être maniées aisément.

En outre, grâce à l'invention, le remplacement d'un tronçon de grillage avertisseur, de gaine tubulaire ou de conduite s'effectue aisément, car il n'est pas nécessaire de rétablir une continuité électrique.

De plus, de par la gamme de fréquences utilisée et le principe de détection mis en oeuvre, la présence d'une grosse masse métallique dans le voisinage du grillage avertisseur, de la gaine tubulaire ou de la conduite n'empêche pas sa détection.

D'autres caractéristiques et avantages de la présente invention apparaîtront à la lecture de la description détaillée qui va suivre, d'exemples de mise en oeuvre non limitatifs de l'invention, et à l'examen du dessin annexé sur lequel :
- la figure 1 est une vue schématique de dessus d'un grillage avertisseur conforme à un premier exemple de réalisation de l'invention,
- la figure 2 illustre la manière de détecter le grillage avertisseur de la figure 1,
- la figure 3 représente de façon schématique la structure générale de l'émetteur utilisé pour détecter le grillage de la figure 1,
- la figure 4 représente de façon schématique la structure générale du récepteur,
- la figure 5 est une vue schématique de dessus d'une variante de réalisation du grillage avertisseur de la figure 1,
- la figure 6 est une vue schématique de dessus d'un grillage avertisseur conforme à un deuxième exemple de réalisation de l'invention,
- la figure 7 représente de façon schématique la structure générale de l'émetteur utilisé pour détecter le grillage de la figure 6,
- la figure 8 illustre la puissance reçue par les différents éléments détectables du grillage de la figure 6 en fonction de la fréquence d'émission,
- la figure 9 illustre schématiquement l'agencement des antennes d'émission et de réception, et
- la figure 10 est une vue schématique en perspective d'une conduite comportant des éléments détectables.

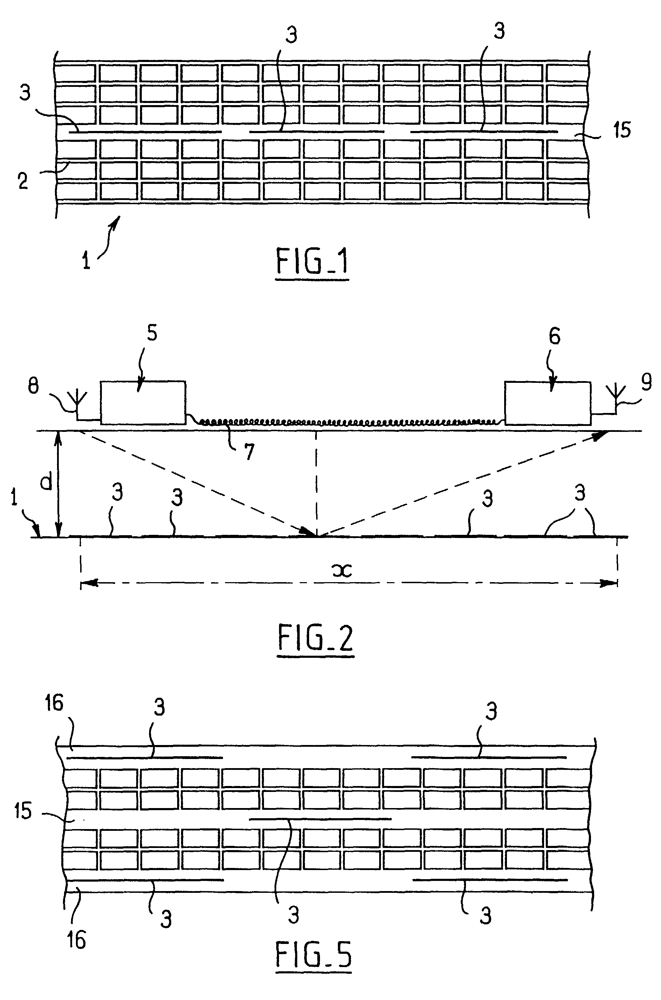

Le grillage avertisseur 1 représenté sur la figure 1 comprend une nappe 2 en matière plastique, réalisée de façon connue en soi par extrusion, et des éléments non magnétiques constitués dans l'exemple décrit par des tronçons d'un fil conducteur électrique non magnétique, par exemple en cuivre.

La nappe 2 présente une structure générale ajourée avec une bande centrale 15 plus large sur laquelle les éléments détectables 3 sont fixés, par exemple par fusion locale de matière plastique.

Les mailles ou ouvertures de la nappe 2 peuvent présenter des formes diverses sans que l'on sorte du cadre de la présente invention.

Dans l'exemple de la figure 1, les tronçons de fil conducteur sont rectilignes, alignés avec l'axe longitudinal de la nappe 2, étant disposés dans le prolongement les uns des autres.

Le grillage avertisseur 1 est destiné à être enfoui dans le sol à une profondeur d par exemple de l'ordre de 1 m et à une certaine distance au-dessus d'un ouvrage enterré tel qu'un câble ou une canalisation, comme illustré sur la figure 2.

Pour détecter à distance la présence du grillage avertisseur 1, on utilise un dispositif de détection comprenant un émetteur 5 destiné à émettre un rayonnement électromagnétique à la surface du sol et un récepteur 6 relié à l'émetteur 5 par un câble 7, dont le rôle sera précisé dans la suite.

L'émetteur 5 comporte une antenne 8 à polarisation circulaire et le récepteur comporte une antenne 9, la distance horizontale x entre les antennes 8 et 9 étant de l'ordre de 2 à 3 m dans l'exemple décrit.

La séparation des antennes 8 et 9 permet de réduire l'influence de la réflexion des ondes électromagnétiques par la surface du sol.

Les antennes 8 et 9 utilisées présentent un encombrement relativement faible et une bonne directivité, compte tenu de la bande de fréquences utilisée, comme cela sera précisé dans la suite.

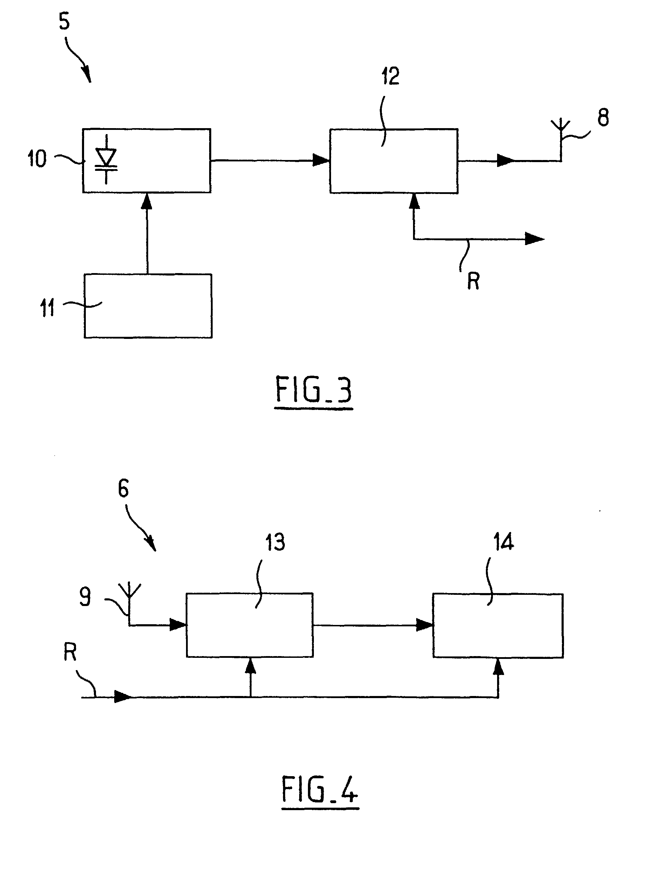

On a représenté sur la figure 3 la structure générale de l'émetteur 5, lequel comporte un oscillateur 10 dont la fréquence est réglable au moyen d'une diode varicap par exemple, un dispositif 11 de commande de cet oscillateur et un amplificateur haute fréquence 12 pour amplifier le signal délivré par l'oscillateur 10, cet amplificateur 12 étant relié d'une part à l'antenne 8 et d'autre part au câble 7 pour y injecter un signal de référence R.

On a représenté sur la figure 4 la structure générale du récepteur 6, lequel comporte un démodulateur synchrone 13 analogique recevant d'une part le signal capté par l'antenne 9 et d'autre part le signal de référence R provenant de l'émetteur 5 via le câble 7.

Le démodulateur synchrone 13 est relié à un dispositif de traitement 14 recevant également le signal de référence R.

Dans l'exemple décrit, l'émetteur 5 émet dans la bande 100-105 MHz et effectue un balayage de fréquence par incrément de 0,5 MHz.

La longueur des éléments détectables 3 est choisie de manière à ce que ces derniers soient accordés sur une fréquence d'émission de l'émetteur 5, compte tenu de la nature du sol dans lequel est enterré le grillage avertisseur.

La longueur des éléments détectables 3 est de 50 cm dans l'exemple décrit, soit environ la moitié de la longueur d'onde du rayonnement électromagnétique émis par l'émetteur 5 dans le sol, pour la gamme de fréquences considérée et pour un sol de permittivité égale à 9.

La permittivité du sol est susceptible de varier dans une assez large mesure et la longueur des éléments détectables 3 est choisie de manière à ce que, compte tenu de la gamme de fréquences balayée, il y ait résonance pour une fréquence de cette gamme.

Le dispositif de traitement 14 est agencé pour détecter cette résonance des éléments détectables 3 et délivrer à l'utilisateur un signal sonore ou lumineux pour signaler la détection du grillage avertisseur.

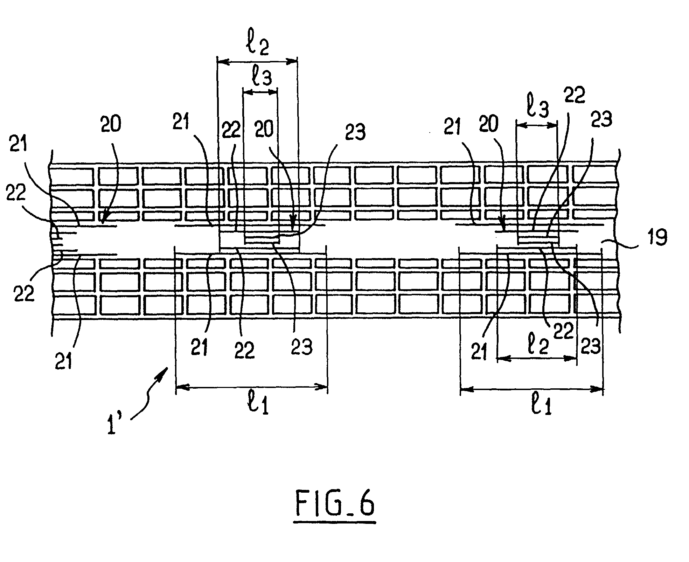

Dans l'exemple représenté sur la figure 5, la nappe en matière plastique comporte deux bandes d'extrémité 16 en plus de la bande centrale 15 et les éléments détectables 3 sont disposés en quinconce sur ces bandes d'extrémité 16 et la bande centrale 15.

La répartition des éléments détectables 5 est avantageusement choisie de manière à être spécifique à un type de grillage avertisseur, par exemple un grillage avertisseur destiné à signaler des canalisations de gaz.

Pour un autre type de canalisations, la répartition des éléments détectables sur la nappe en matière plastique du grillage sera différente, de manière à obtenir une signature électromagnétique différente, permettant de différencier entre eux les différents types de grillages avertisseurs.

Dans l'exemple de réalisation des figures 1 à 5, on émet avec une fréquence variable dans le sol et la longueur des éléments détectables 3 est choisie de telle sorte qu'il y ait accord pour une fréquence balayée par l'émetteur, compte tenu de la permittivité du sol.

Dans l'exemple de réalisation des figures 6 à 8 qui va maintenant être décrit, on émet avec une fréquence fixe dans le sol et les éléments détectables sont agencés de manière à ce que certains d'entre eux se trouvent accordés sur la fréquence d'émission de l'émetteur, compte tenu de la permittivité du sol dans lequel est enterré le grillage.

On a représenté sur la figure 6 un grillage 1' comportant une bande centrale 19 plus large que la bande 15 précédemment décrite en référence à la figure 1, sur laquelle sont disposés des groupes 20 d'éléments détectables. Dans cet exemple, tous les éléments détectables sont situés sur la bande centrale mais en variante, une partie seulement des éléments détectables est située sur la bande centrale et le reste sur des bandes d'extrémité similaires aux bandes d'extrémité 16 précédemment décrites.

Les éléments détectables d'un même groupe 20 sont constitués par une pluralité de tronçons de fil conducteur de différentes longueurs. Plus particulièrement, chaque groupe 20 comporte trois paires de brins parallèles 21, 22 et 23, les brins d'une même paire étant de longueur identique. Les brins 23 de plus petite longueur sont disposés au centre et les brins 21 de plus grande longueur près des bords de la bande 19. L'écartement entre les brins 21 peut atteindre 20 cm par exemple.

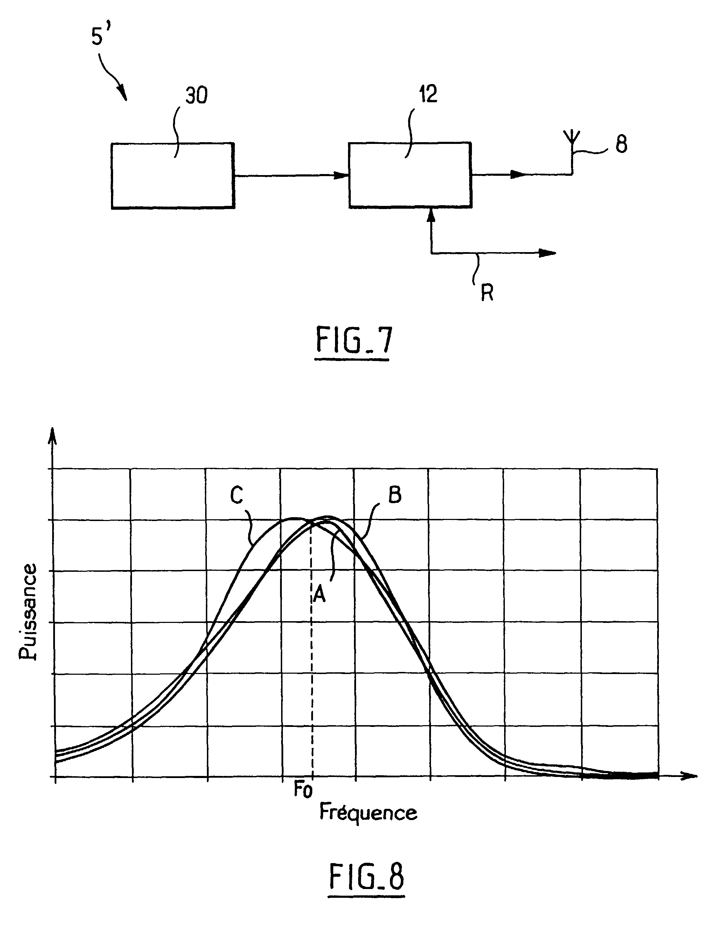

On utilise pour détecter le grillage 1' l'émetteur 5' représenté sur la figure 7, qui diffère de l'émetteur 5 précédemment décrit par le fait que l'oscillateur 10 commandable en fréquence est remplacé par un oscillateur 30 dont la fréquence d'émission est fixe, égale à 130 MHz par exemple.

Dans l'exemple de réalisation décrit, les brins 21 présentent une longueur de 40 cm, les brins 22 une longueur de 28 cm et les brins 23 une longueur de 22 cm.

Deux groupes 20 successifs d'éléments détectables sont distants d'un mètre environ.

On a représenté sur la figure 8 la puissance reçue par trois éléments détectables de longueurs différentes en fonction de la fréquence.

Plus particulièrement, la courbe A représente la puissance reçue par les brins 21 pour un sol de permittivité relative égale à 10, la courbe B celle reçue par les brins 22 pour un sol de permittivité relative égale à 20, et la courbe C celle reçue par les brins 23 pour un sol de permittivité relative égale à 30.

On comprend à l'examen de la figure 8 que pour une fréquence d'émission F₀ donnée, l'une des paires de brins composant le groupe 20 d'éléments détectables reçoit une puissance sensiblement maximum quelle que soit la valeur de la permittivité relative du sol.

On permet ainsi au grillage pourvu des groupes 20 d'éléments détectables d'être détecté indépendamment de la nature du sol dans lequel il est enfoui.

A titre d'exemple, pour une fréquence d'émission égale à 130 MHz, la longueur I₁ des brins 21 peut être choisie égale à 30 cm, la longueur I₂ des brins 22 peut être choisie égale à 21 cm et la longueur I₃ des brins 23 peut être choisie égale à 17 cm.

La largeur des éléments détectables est comprise par exemple entre 1 et 10 mm, mais de préférence elle est de l'ordre de 2 à 3 mm.

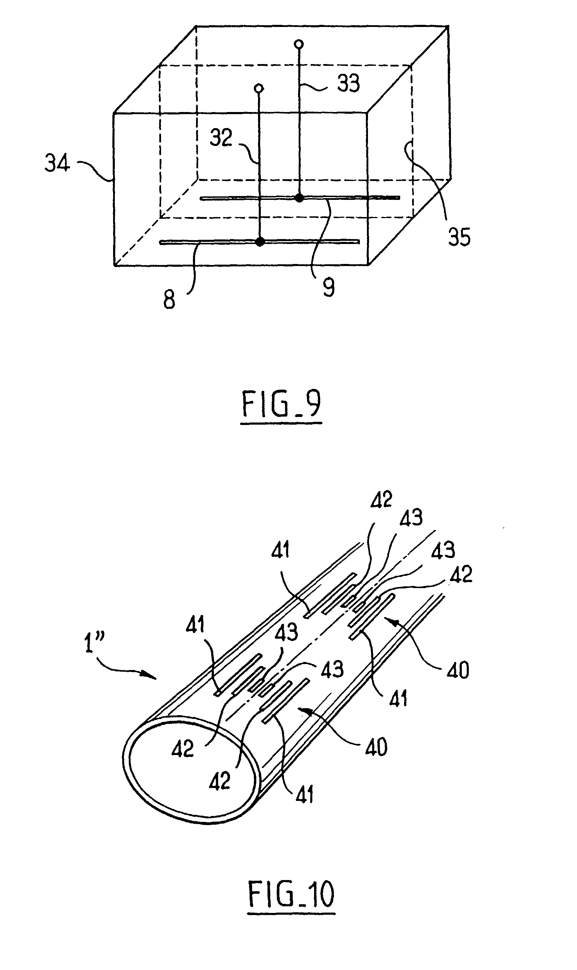

On a illustré sur la figure 9 l'agencement des antennes d'émission 8 et de réception 9, cet agencement étant bien entendu, donné à titre d'exemple seulement, d'autres agencements pouvant convenir sans que l'on sorte du cadre de la présente invention.

Les antennes d'émission et de réception sont constituées par deux brins métalliques parallèles dont la longueur correspond à un quart de longueur d'onde du rayonnement émis par l'émetteur.

Ces brins sont fixés à leur milieu à des tiges de support respectives 32, 33, permettant d'acheminer le signal de l'émetteur vers l'antenne d'émission 8 et de transmettre le signal récupéré par l'antenne de réception 9 vers le récepteur.

Les brins 8 et 9 sont contenus dans une cage métallique 34 de forme parallélépipédique, ouverte à sa face inférieure et constituant un blindage permettant de limiter l'effet de l'environnement extérieur lors de la détection.

Les antennes 8 et 9 sont séparées à l'intérieur de la cage 34 par une plaque métallique verticale 35 permettant de limiter le couplage entre les antennes.

Cette plaque métallique se situe à une distance d'un quart de longueur d'onde du rayonnement émis de chacune des antennes 8 et 9.

La hauteur de la cage métallique est d'un quart de longueur d'onde.

Les éléments détectables peuvent être protégés par un film de polyoléfine.

Dans une variante de réalisation non représentée, les éléments détectables sont réalisés sous la forme de bandes de peinture métallisée.

On peut aussi, sans sortir du cadre de la présente invention, ne pas utiliser des tronçons de fil conducteur rectilignes mais des brins conformés selon toute forme géométrique ayant des capacités de résonance, en spirale par exemple, la longueur du brin et les paramètres de la spirale étant choisis en fonction de la signature électromagnétique et de la directivité recherchées.

On peut encore disposer les éléments détectables sous forme de croix ou d'échelles par exemple.

On notera que la disposition des éléments détectables selon des motifs spécifiques est facilitée par leur longueur relativement faible.

On a représenté sur la figure 10 une conduite 1" en matière plastique sur la surface extérieure de laquelle sont déposées des bandes de peinture conductrice destinées à constituer des groupes 40 d'éléments détectables 41, 42 et 43 respectivement analogues aux éléments 21, 22 et 23 décrits en référence à la figure 6.

## Revendications

1. Dispositif de détection électromagnétique pour détecter une structure enterrée telle qu'un grillage avertisseur, une gaine tubulaire ou une conduite, comportant des éléments détectables constitués au moins en partie par des conducteurs électriques, caractérisé par le fait qu'il comporte :
- un émetteur (5) agencé pour émettre un rayonnement électromagnétique dans le sol dans une bande de fréquences supérieures à 10 MHz, de préférence supérieures à 70 MHz, cet émetteur comprenant une antenne d'émission (8), lesdits conducteurs électriques étant accordés sur une fréquence d'émission de l'émetteur,
- un récepteur (6) comprenant une antenne de réception (9) séparée de l'antenne d'émission et agencé pour recevoir un rayonnement électromagnétique réfléchi par ladite structure (1 ; 1' ; 1").

2. Dispositif selon la revendication précédente, caractérisé par le fait qu'il comporte des moyens de liaison (7) pour transmettre un signal de référence (R) depuis l'émetteur vers le récepteur.

3. Dispositif selon l'une des revendications 1 et 2, caractérisé par le fait que l'émetteur est agencé pour émettre dans la bande 10-2000 MHz, de préférence 70-500 MHz, avec balayage de fréquence.

4. Dispositif selon l'une quelconque des revendications 1 à 3, caractérisé par le fait que l'émetteur est agencé pour émettre dans la bande 10-2000 MHz, de préférence 70-500 MHz, avec une ou plusieurs fréquences fixes, les éléments détectables étant respectivement sensiblement accordés sur cette ou ces fréquences pour des valeurs de permittivité du sol différentes.

5. Dispositif selon l'une quelconque des revendications 1 à 4, caractérisé par le fait que les antennes d'émission (8) et de réception (9), sont disposées dans un boîtier (34) laissant passer les ondes électromagnétiques vers le sol et en provenance de ce dernier et constituant un blindage permettant d'isoler les antennes de l'environnement extérieur, ces dernières étant de préférence en outre séparées à l'intérieur du boîtier par une plaque métallique verticale (35) limitant le couplage entre elles.

6. Dispositif selon la revendication précédente, caractérisé par le fait que les antennes sont constituées par deux brins parallèles dont la longueur correspond sensiblement à un quart de la longueur d'onde du rayonnement émis, ces brins étant distants d'une demi-longueur d'onde, la plaque métallique limitant le couplage étant située à mi-distance des brins, ces derniers étant disposés en face inférieure d'une cage métallique ouverte vers le bas et dont la hauteur est d'environ un quart de la longueur d'onde du rayonnement émis.

7. Procédé de détection d'une structure enterrée dans le sol telle qu'un grillage avertisseur, une conduite ou une gaine tubulaire, cette structure comportant des éléments détectables (3), la détection s'effectuant au moyen d'un dispositif de détection électromagnétique, procédé caractérisé par le fait qu'il comporte les étapes consistant à :
- envoyer dans le sol vers la structure enterrée (1 ; 1' ; 1") au moyen d'un émetteur (5) un rayonnement électromagnétique haute fréquence,
- recueillir au moyen d'un récepteur (6) dont l'antenne de réception (9) est éloignée de l'antenne d'émission (8) le rayonnement électromagnétique réfléchi par ladite structure,
- traiter un signal représentatif du rayonnement électromagnétique réfléchi par la structure enterrée en fonction d'un signal de référence (R) représentatif du rayonnement électromagnétique émis par l'émetteur, de manière à déterminer la présence effective ou non de ladite structure,
- le rayonnement électromagnétique émis par l'émetteur étant de fréquence variable et au moins certains desdits éléments détectables (3) étant accordés sur une fréquence d'émission balayée par l'émetteur,
et/ou
- le rayonnement électromagnétique émis par l'émetteur étant de fréquence fixe et les éléments détectables étant choisis pour être accordés sur la fréquence d'émission de l'émetteur pour différentes valeurs de permittivité du sol, représentatives de la plupart des natures du sol dans lequel la structure est susceptible d'être enterrée.

8. Procédé selon la revendication précédente, caractérisé par le fait que le rayonnement électromagnétique émis dans le sol se situe dans la bande de fréquences 10-2000 MHz et de préférence 70-500 MHz.

9. Structure à enterrer telle qu'un grillage avertisseur, une conduite ou une gaine tubulaire, comportant des éléments détectables à distance au moyen d'un dispositif de détection comprenant un émetteur d'ondes électromagnétiques, caractérisée par le fait que lesdits éléments détectables sont constitués au moins en partie par des conducteurs électriques accordés sur une fréquence d'émission de l'émetteur.

10. Structure selon la revendication 9, caractérisée par le fait qu'elle constitue un grillage avertisseur et comporte une nappe (2) en matière plastique, lesdits éléments détectables étant assujettis à cette nappe.

11. Structure selon la revendication 9 ou 10, caractérisée par le fait que lesdits éléments détectables (3 ; 21, 22, 23) sont composés de tronçons d'un fil conducteur, de préférence non magnétique.

12. Structure selon la revendication 11, caractérisée par le fait que lesdits tronçons de fil conducteur sont conformés en spirale, en croix ou en échelle.

13. Structure selon la revendication 9 ou 10, caractérisée par le fait que les éléments détectables sont constitués par des nappes conductrices.

14. Structure selon l'une quelconque des revendications 9 à 13, caractérisée par le fait que lesdits éléments détectables (3 ; 21, 22, 23) ont une longueur correspondant sensiblement à la demi-longueur d'onde dans le sol desdites ondes électromagnétiques, pour une fréquence d'émission de l'émetteur et une permittivité du sol données.

15. Structure selon l'une quelconque des revendications 9 à 14, caractérisée par le fait que la longueur desdits éléments détectables (3 ; 21, 22, 23) est comprise entre 5 et 50 cm, de préférence entre 10 et 45 cm.

16. Structure selon l'une quelconque des revendications 9 à 15, caractérisée par le fait que les éléments détectables sont agencés par groupes (20) de plusieurs, les éléments (21, 22, 23 ; 41, 42, 43) d'un même groupe (20 ; 40) étant respectivement sensiblement accordés sur une même fréquence d'émission de l'émetteur pour des permittivités du sol données.

17. Structure selon la revendication précédente, caractérisée par le fait que chaque groupe (20 ; 40) d'éléments détectables en comporte deux ou plus.

18. Structure selon l'une des revendications 16 et 17, caractérisée par le fait qu'elle comporte au moins une paire d'éléments détectables (21, 22, 23 ; 41, 42, 43) de même longueur au sein d'un même groupe (20 ; 40) d'éléments détectables.

19. Structure selon l'une quelconque des revendications 16 à 18, caractérisée par le fait qu'elle comporte des tronçons de fil conducteur de longueurs différentes au sein d'un même groupe d'éléments détectables, ces longueurs correspondant sensiblement à la demi-longueur d'onde dans le sol desdites ondes électromagnétiques pour une même fréquence d'émission de l'émetteur et des valeurs différentes de la permittivité du sol, représentatives des différentes natures de sol dans lequel la structure est susceptible d'être enterrée.
